# EUROPEAN PATENT APPLICATION

(11) **EP 1 336 426 A1**
(43) Date of publication of application: **20.08.2003**
(21) Application number: 02075504.7
(22) Date of filing: 06.02.2002
(51) Int. Cl.: B01D 11/02, A23J 1/14, A23L 1/015

(54) **Process and equipment for removing solvent from solid extraction residues**

(71) Applicant: De Smet Engineering N.V., 2650 Edegem (BE)
(72) Inventor: van Doosselaere, Philippe, 1180 Uccle (BE)
(74) Representative: Donné, Eddy

(57) **Abstract**

The invention relates to a process and equipment for the removal of solvent from an extraction residue comprising steam stripping of this residue in a stripping section (29); collecting the vapours ensuing from the steam stripping operation; and drying the residue resulting from the steam stripping operation in a drying section (24). The residue resulting from the steam stripping operation is exposed in an additional compartment (25) to a lower pressure than the one prevailing at the end of this stripping operation; and vapours released during this exposure are removed by means of a pump (43) and recuperated.

## Description

The invention relates to a process and equipment for removing solvent from extraction residues as for instance obtained by the solvent extraction of raw materials such as oilseeds.

The extraction of vegetable oils and fats from oil seeds with organic solvents, such as commercial *n*-hexane, leads to a solution of oil in solvent (miscella), on the one hand, and an extraction residue (marc), on the other hand.

This marc contains appreciable amounts of solvent, for instance 30%, which has to be removed by evaporation before the desolvented marc (meal) can be safely stored and utilised.

Removing the solvent adhering to the marc, involves a number of unit operations:
- Pre-desolventising by heating the marc to provide heat for evaporating the solvent. This is commonly carried out in a number of superimposed, shallow bed trays that are heated by indirect steam;
- Counter-current steam stripping by passing live steam through a number of superimposed counter-current trays; These trays are also commonly heated by indirect steam but the lowest of these counter current trays is usually not heated. If necessary for nutritional reasons, the meal can also be toasted during the counter-current stripping stage;
- Drying and cooling the desolvented meal by passing heated and/or ambient air through the meal.

The vapours evolved during the pre-desolventising and steam stripping stages are usually collected simultaneously and condensed to recuperate the extraction solvent. The vapours can be condensed in a water cooled condenser; more commonly, their latent heat is recovered in the first stage evaporator. Because of the flammable nature of commonly used extraction solvents such as hexane, air must be rigorously excluded from these stages. Accordingly, the various trays referred to above, are mounted within a shell and the material is extracted from this shell by using for instance a rotary valve before being forwarded to the subsequent drying and cooling stages.

In EP-A-0.120.984, in the name of Schumacher, a single piece of equipment (referred to as a "DTDC") is described in which the desolventising, toasting, drying and cooling functions have been combined within a single shell. Within such a DTDC, the marc is fed continuously to the uppermost of a series of superimposed and agitated trays that each have been provided with means which ensure that the material being treated moves to a subsequent compartment. To separate the pre-desolventising and stripping sections from the drying and cooling sections, a rotary valve is usually used.

By a proper design of the desolventising and toasting stages of the process, the material leaving the toasting stage will have a residual hexane content ranging from 200 to 500 ppm by weight and its moisture content will be such that the subsequent air drying stage will lower this moisture content close to the level required in the final meal product; further cooling by air will then reach both the required meal moisture content and the meal temperature. A large portion of the residual hexane is removed during the drying and cooling stages but since these stages employ air and since it is technically hardly feasible to recuperate the small amounts of hexane from the large volume of air involved in the drying and cooling process, this hexane is released into the atmosphere and thus constitutes an emission of volatile organic compounds (VOC). However, more and more restrictions on such VOC emissions are coming into force.

It is therefore an object of the invention to reduce volatile organic compound emissions to the atmosphere during the drying and cooling stages following the desolventising process.

It is also an object of the invention to recuperate some or most of the residual solvent still present in the meal after it has been steam stripped.

According to the invention, these objects are accomplished by a process for removing solvent from an extraction residue comprising:
- steam stripping of this residue;
- collecting the vapours ensuing from the steam stripping operation; and
- drying the residue resulting from the steam stripping operation
   in which
- the residue resulting from the steam stripping operation is exposed to a lower pressure than the one prevailing at the end of this stripping operation; and
- vapours released during this exposure are removed and recuperated.

After having been collected, these vapours may be then introduced into the vapour stream generated during said steam stripping operation to be condensed in the first stage evaporator or may be sent to a condenser and condensed.

The condensate from this latter condenser can then be treated in the hexane-water separator and the hexane is recovered and recycled to the extraction process.

Accordingly, solvent vapours which are liberated by the residue as a result of its exposure to a reduced pressure, are not released into the atmosphere but condensed instead.

Preferably, the stripped residue is exposed to a lower pressure in at least one compartment from where the vapours are pumped away, for instance by means of a steam ejector, whereby its motive steam, may partially replace the steam used for stripping.

The stripped residue is advantageously exposed to a lower pressure for a period of about 2 to 15 minutes.

The lower pressure may be up to 0,1 MPa below the pressure prevailing at the end of the stripping operation and preferably up to 50 kPa below atmospheric pressure.

The extraction residue may be pre-desolventised by heating in a heating section before stripping. Heating may also be applied while stripping.

The invention also relates to equipment for use in a continuous process for removing solvent from an extraction residue according to the invention as defined any one of the annexed claims 1 to 12. Said equipment comprises at least
- a stripping section;
- a drying section and optionally a cooling section; and is characterised in that it comprises
- an additional section with at least one additional compartment between the stripping section and the drying section; and
- a means for removing vapours liberated within this additional section from this section and recuperating them.

Preferably, this means for removing and recuperating vapours have an outlet connected to the stripping section or the outlet of the vapour stream.

In another embodiment, this means for removing and recuperating vapours has an outlet connected to a condenser.

The means for removing and recuperating vapours may comprise a pump.

The stripping section may be divided into a number of superimposed compartments by superimposed trays and/or the equipment may comprise at least one heating tray for pre-desolventising above the stripping section. The additional compartment according to the invention is mounted between the lowest stripping compartment and the drying section, preferably underneath the lowermost compartment of the stripping section.

Other characteristics, objects and advantages of this invention will become clear from the following description of a process and equipment for the removal of solvent from an extraction residue, according to the invention, given as an example only with reference to the accompanying drawings, wherein:
Figure 1 is a flow diagram of an embodiment of the process according to the invention;
figure 2 is a schematical representation of equipment for performing the embodiment of the process according to figure 1.

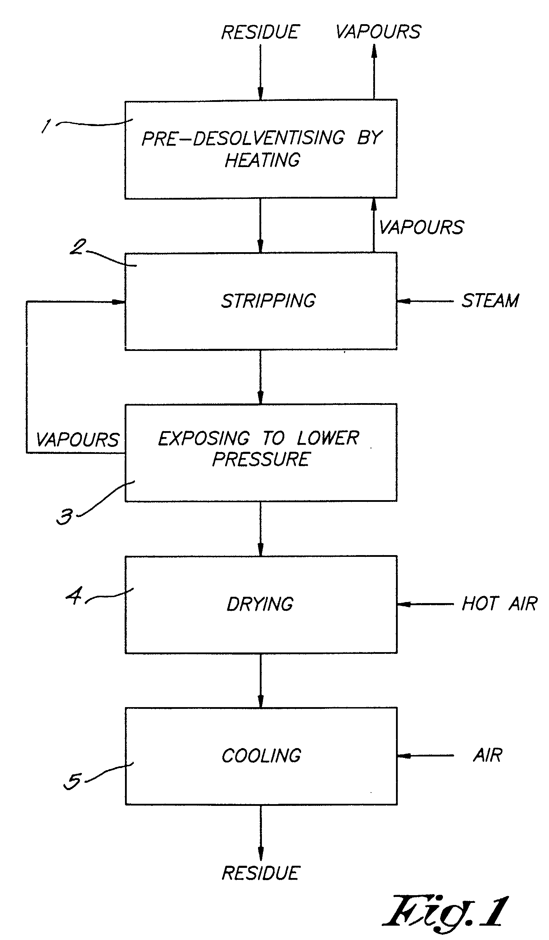

As shown in figure 1, for removing the solvent from an extraction residue, this residue or marc is first subjected to a pre-desolventising, meaning a first partial removal of solvent, by heating (step 1), for instance indirectly by means of steam. The pressure during pre-desolventising will in general be close to atmospheric pressure (deviating from +10 to -5 hPa gauge). The temperature of the marc to be treated is in general just below the atmospheric boiling point of the solvent, for example 55 to 60°C if the solvent is n-hexane.

During the pre-desolventising, the marc is heated indirectly by steam. Due to the supply of heat, solvent will evaporate, but as long as solvent remains in the marc, the temperature will not rise above the atmospheric boiling range of the solvent (62 to 70°C for commercial n-hexane).

The pre-desolventised marc is then subjected in step 2 to a counter-current stripping treatment by means of live steam supplied at a pressure of for instance 30 to 50 kPa below the lowest stripping tray. The solvent liberated during stripping and pre-desolventising and the residual live steam are condensed, for instance in the first stage evaporator (not shown in the figures) where the latent heat of the solvent and the residual live steam are used for heating the miscella. The condensate is then treated in the hexane water separator to recuperate the hexane (not shown in the figures). The marc may be heated before stripping.

Pre-desolventising and stripping permit to reduce the solvent content from some 30 % in the extraction residue to about 200 to 500 ppm solvent in the stripped meal.

The meal resulting from the stripping step 2 is subsequently exposed in step 3 to a pressure which is up to 0,1 MPa lower than the pressure at the end of the stripping step 2 during an average period of 2 to 15 minutes, for instance 3 min.

During exposure to lower pressure, the meal may be heated.

Finally, the desolventised meal is dried in step 4 by means of hot air of for example 140°C and then in step 5 with ambient air or it is dried and cooled at once with ambient air.

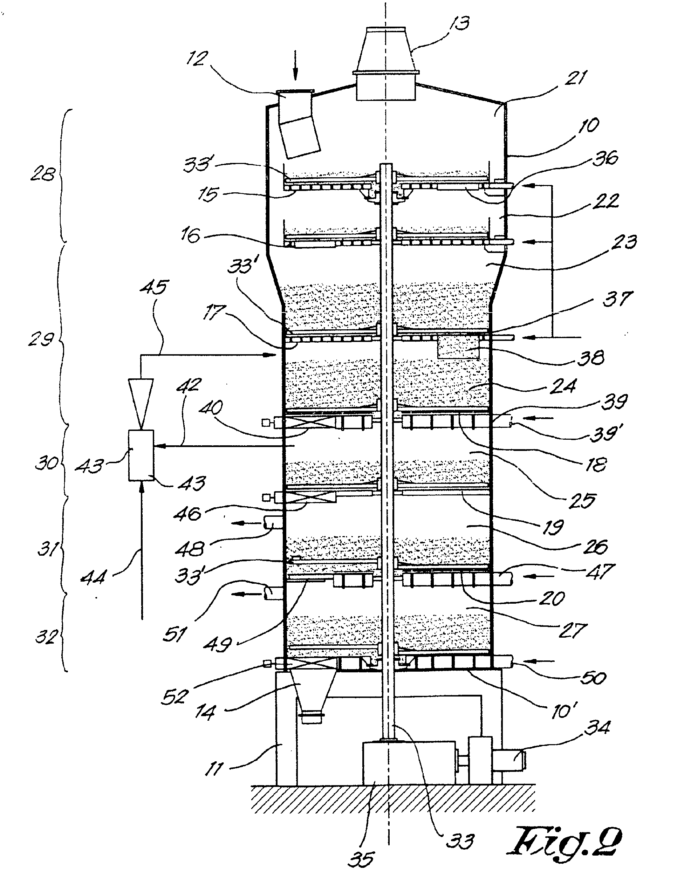

To illustrate the equipment according to the invention, figure 2 shows a DTDC-embodiment having a single upstanding shell 10, modified according to the invention.

Shell 10 is mounted on legs 11 and provided on its top with an access port 12 for the marc and with a vapour duct 13, through which the vapours leave the shell 10. The duct 13 leads to a vapour condensing system (not shown in Figure 2). The bottom 10' is provided with an outlet port 14.

The shell 10 is segmented by superimposed trays 15 to 20 in superimposed compartments 21 to 27 forming from top to bottom a pre-desolventising section 28, stripping section 29, a section with reduced pressure 30, a drying section 31 and a cooling section 32.

A central agitator shaft 33 is mounted inside the shell 10 and driven by a motor 34 by the intermediary of a reduction gear box 35 located below the shell 10. Above each tray 15 to 20 and above the bottom 10', agitating or sweep arms 33' are fixed to the agitator shaft 33.

Marc entering the shell 10 via access port 12 arrives on top of pre-desolventising tray 15 and is spread over this tray 15 by sweep arms 33'. The sweeping action also moves the extraction residue towards and across a hole 36 in the pre-desolventising tray 15 through which hole 36 the material falls onto the next pre-desolventising tray 16. In figure 2, only two pre-desolventising trays 15 and 16 have been shown, but in practice, many more such trays, for instance, as much as seven or more, can be mounted above each other.

The pre-desolventising trays 15 and 16 situated at the bottom of the compartments 21 and 22 of the pre-desolventing section 28 are heated by indirect steam. They are therefore each connected to a steam supply with a pressure of for example 0.5 to 1.0 MPa gauge, and to a condensate return line (not shown in figure 2).

The pre-desolventising trays 15 and 16, as shown in figure 2, do not reach the wall of the shell 10. This means that vapours evolving from each pre-desolventising tray 15 and 16 will by-pass higher trays and pass directly into the vapour duct 13. Another way of achieving this is by building the pre-desolventising trays 15 and 16 around a central chimney for the evolving vapours.

Because the vapours pass directly into the vapour outlet duct 13, the pressure inside the pre-desolventising section will be uniform. In general, the pressure will be close to atmospheric pressure (deviating from +10 to -5 hPa gauge).

The temperature of the marc entering the shell 10 will in general be just below the atmospheric boiling point of hexane, for instance 55 to 60°C. By means of steam, heat is supplied to the pre-desolventising trays 15 and 16 and thus to the marc and hexane will evaporate. As long as liquid hexane is still present in the marc, its temperature will not rise above the atmospheric boiling range of commercial n-hexane (62-70°C).

From the lowest pre-desolventising tray 16, the pre-desolvented marc is forwarded by the sweep arms 33' through a hole 36 in tray 16 to the uppermost counter-current stripping compartment 23, on tray 17.

Like tray 16, this tray 17 is also heated by steam and has been provided with a large number of stay-bolt holes that typically represent some 2% to 5% of the tray surface. These holes have been constructed in such a way that they allow the passage of stripping steam from below but retain the marc or meal on the tray. Alternatively, tray 17 may be provided with larger holes covered with grids or screens, that represent 5-30% of the tray surface.

A much larger hole 37 provided with a chute 38 permits the passage of the meal from tray 17 to the second stripping compartment 24 below, above tray 18.

The height of the meal bed on the counter-current trays 17 and 18 is much larger than on the pre-desolventising trays 15 and 16 above. Since there is no gap between the counter-current tray 17 and the shell 10, nor a chimney around the agitator shaft 33, the high meal bed provides a resistance to the upward gas flow. A pressure drop of 1-5 kPa per counter-current tray 17 and 18 must therefore be reckoned with.

In figure 2, only two trays, the uppermost tray 17 and the lowermost tray 18 of the stripping section 29 have been shown but in industrial practice, the number of counter-current trays in this section 29 may be higher; it may be as high as five or even more. This causes the pressure drop over the entire counter-current stripping section 29, excluding the lowest tray 18 to be some 5-25 kPa.

The lowest counter-current tray 18 differs from the other counter current trays 17 in that it is not heated by indirect steam but, that live steam is fed into the space below this tray 18 by means of a steam dispenser 39 connected to a live steam inlet 39'.

This steam moves through the holes in the deck of tray 18 and then meets the meal. In industrial practice, it is not uncommon that said holes are rather small holes and live steam is fed at a pressure of 30-50 kPa gauge. This prevents the holes from fouling.

Live steam moves upwards through all steam stripping trays 18 and 17 and through the meal held by those steam stripping trays. This live steam will condense and thereby heat the meal and allow it to be toasted. In addition the flow of gas will facilitate the evaporation of the extraction solvent in accordance with Dalton's law. Accordingly, well-designed and properly operated pre-desolventising and stripping sections 28 and 29, as described above, will reduce the hexane content of marc from some 30% on entering the DTDC to a residual hexane level of 200-500 ppm on exiting the stripping or toasting section 29.

Vapours loaded with solvent move upwards until the top of the shell 10 and are evacuated through the vapour outlet duct 13 to be condensed.

Stripped meal leaves the lowermost stripping compartment 24 through a rotary valve 40, forwarding the meal downwards.

In a standard DTDC, the meal leaving the stripping section 29 will then be exposed to air for drying and cooling purposes. Since it is not feasible to recuperate the relatively small amount of hexane from the large volume of air involved, this hexane will be emitted as volatile organic compound.

To reduce this hexane emission, the equipment according to the invention is provided with a lower pressure section 30 comprising one or more additional compartments 25 underneath the lowest stripping compartment 24. In figure 2, only one such additional compartment 25 is shown. Also according to the invention, this additional compartment 25 is connected by duct 42 to a pump 43 causing the lower pressure and removing the vapours released in the lower pressure section 30.

Many different kinds of pump lend themselves to being used in the equipment and process according to the invention but preferably, a steam ejector is used, whereby a single stage ejector has been found to be fully adequate. This steam ejector has the advantage that its motive steam which is fed via duct 44, can be used to replace part of the live stripping steam used in the counter-current stripping section 29 of the DTDC.

Accordingly, the pump outlet is, in the given example, connected by duct 45 to the lowest stripping compartment 24, more particularly to the space above the meal bed in this compartment 24. Not only the motive steam but also the vapours pumped out of the lower pressure compartment 25 are redirected to the stripping compartment 24 and thus recuperated.

However, other embodiments of introducing the vapours in the vapour stream are possible and fall within the scope of the invention. For example the pump outlet may be connected to the live steam inlet 39' or to the dispenser 39. It may also be connected to a compartment 23, 22 or 21 above this dispenser 39, or even connected straight to the exit vapour duct 13, provided the vapours that have been compressed by pump 43 finally enter the vapour condensing system connected to vapour duct 13.

The pump 43 according to the invention creates a sub-atmospheric pressure in the additional compartment 25. A wide range of sub-atmospheric pressures has been found to be effective in reducing the residual solvent content of the meal being desolventised. In practice, a compression by 10 hPa and redirection of the compressed gases below the uppermost counter-current tray has been found to be fully satisfactory, but a higher compression and a vacuum in the additional compartment 25 of up to 50 kPa also fall within the scope of the invention.

The pressure reduction in the additional compartment 25 alone does not explain the extent of the reduction of the hexane in the meal, even with a small residence time in the additional compartment 25.

The amount of hexane recovered in the additional compartment 25 goes well beyond what was expected through simple temperature and pressure equilibrium calculations. It is assumed that the combination with the lower pressure and a continuous evacuation of vapours from the compartment 25 causes a flash evaporation of water and hexane.

Subsequent exposure to substantial amounts of air during the drying and cooling sections 31 and 32 barely decreases the residual hexane content any further.

As shown in figure 2, tray 19 of the additional compartment 25 is fitted with a rotary valve 46 to extract the meal from the additional compartment 25 into the drying section 31 consisting in the example given of a single compartment 26. It is clear that the drying section 31 may comprise two or more superimposed drying compartments 26.

Hot air is introduced through duct 47 in the hollow tray 20 at the bottom of the drying compartment 26, which tray 20 is at its upper side provided with small openings.

The hot air traverses the meal on the tray 20 and leaves the compartment near the top through the outlet 48 charged with humidity.

Temperatures of some 140°C for the incoming hot air are not uncommon and are attained by heat exchange with indirect steam. The temperature of the incoming meal will normally be close to 100°C and, because of the latent heat of water evaporation, both the exhaust air and the meal leaving the drying section 31, will have temperatures of around 55 to 65°C.

This meal temperature is still too high for storing the meal, so that finally, the dried meal is cooled in the cooling section 32 comprising, in the example given, a single compartment 27.

The meal is fed into this compartment 27 through an opening 49 in tray 20.

Outside cooling air is blown or sucked through duct 50 in the hollow bottom tray 10' which is provided with openings in its upper side. This air traverses the meal and leaves the cooling section 32 near the top through outlet 51.

The amount of cooling air is such that a final meal temperature of some 40°C is attained. If cooling is effected by sucking air through the tray 10', a rotary valve 52 is required above the outlet port 14 to extract the cooled meal from the equipment.

Drying and cooling may also take place in one single section, in which ambient air is blown or sucked, in the same way as in section 32 described here above.

The meal does not necessarily have to be dried and cooled inside the shell 10, but may be dried and cooled in separate equipment.

The invention will be further illustrated by the following example: Soya meal was treated in a desolventiser removing of some 1600 metric tonnes per day capacity. The equipment was constructed as described above but had a pre-desolventising section 28 with three superimposed compartments, a stripping section 29 with five superimposed stripping compartments, an additional lower pressure section 30 with one compartment, a drying section 31 with one compartment and a cooling section 32 also with one compartment, all in the same shell 10.

Pump 43 was in the form of a steam ejector Koerting model TD 124000 017659A.

The steam used for indirect heating had a pressure of 0.45 MPa gauge and the hourly consumption of live steam for stripping was 6.1 metric tonnes per hour.

Under those conditions, the residual hexane content of the soy meal leaving the lowest counter-current tray 18 of the stripping section 29 was around 300 ppm which was considered to be low. The hexane content was measured according to the Official Method Ba 14-87 of the American Oil Chemists' Society.

The meal resided in the additional compartment 25 for an average period of 3 min and the residual hexane content of the meal leaving the additional compartment 25 was found to be only 82 ppm. When subsequently a sample was taken of the fully processed, cooled meal, this showed a residual hexane content of 86 ppm. In other words, passing large amounts of air over the meal treated according to the invention did not significantly lower its residual hexane content. Presumably, the residual hexane content, measured during this experiment, pertains to hexane which has permeated intact seed cells. It is known that hexane only very slowly diffuses out of these cells.

On the other hand, the experiment shows that treating meal according to the invention, ensures that "free" hexane, adhering to the meal surface is almost totally removed and recuperated and can thus lead to much reduced emissions of volatile organic compounds.

The invention, therefore, is well adapted to carry out the objects and attain the ends and advantages mentioned, as well as others inherent therein.

While the invention has been depicted, described and defined by reference to exemplary embodiments of the invention, such references do not imply a limitation on the invention, and no such limitation is to be inferred. The invention is capable of considerable modification, alteration, and equivalence in form and function, as will occur to those ordinarily skilled in the pertinent arts and having the benefit of this disclosure. The depicted and described embodiments of the invention are only exemplary, and are not exhaustive of the scope of the invention. It is intended that all such variations within the scope of the invention, giving full cognisance to equivalence in all respects, be included within the scope of the appended claims.

## Claims

1. Process for removing solvent from an extraction residue comprising:
- steam stripping of this residue;
- collecting the vapours ensuing from the steam stripping operation; and
- drying the residue resulting from the steam stripping operation,
**characterised in that**
- the residue resulting from the steam stripping operation is exposed to a lower pressure than the one prevailing at the end of this stripping operation; and
- vapours released during this exposure are removed and recuperated.

2. Process according to claim 1, **characterised in that** the removed vapours are introduced into the vapour stream generated during said stripping operation

3. Process according to claim 1, **characterised in that** the removed vapours are sent to a condenser and condensed.

4. Process according to any one of the preceding claims, **characterised in that** the stripped residue is exposed to a lower pressure in at least one compartment from where the vapours are pumped away.

5. Process according to any one of the preceding claim, **characterised in that** vapours are pumped away by means of a steam ejector.

6. Process according to claim 5, **characterised in that** the steam used in the ejector partially replaces the live steam used for stripping.

7. Process according to any one of the preceding claims, **characterised in that** the stripped residue is exposed to a lower pressure during about 2 to 15 minutes before being subjected to drying.

8. Process according to any one of the preceding claims, **characterised in that** the lower pressure is up to 0,1 MPa below the pressure prevailing at the end of the stripping.

9. Process according to any one of the preceding claims, **characterised in that** the lower pressure is up to 50 kPa below atmospheric pressure.

10. Process according to any one of the preceding claims, **characterised in that** the stripped residue is heated during its exposure to a lower pressure.

11. Process according to any one of the preceding claims, **characterised in that** it comprises a cooling step after the drying step.

12. Process according to any one of the preceding claims, **characterised in that** extraction residue is pre-desolventised by heating the residue in a heating section (28) before the stripping operation.

13. Equipment for use in a continuous process for removing solvent from an extraction residue comprising:
- a steam stripping section (29); and
- a drying section (31),
**characterised in that** it further comprises:
- an additional section (30) comprising at least one additional compartment (25) and located between the stripping section (29) and the drying section (31) and
- a means for removing vapours liberated within this additional section from this section (30).

14. Equipment according to claim 13, **characterised in that** the means for removing and recuperating vapours (43) has an outlet connected to the stripping section (29) or the outlet (13) of the vapour stream.

15. Equipment according to claim 13, **characterised in that** the means for removing and recuperating vapours (43) has an outlet connected to a separate condenser.

16. Equipment according to any one of claims 13 to 15, **characterised in that** the means for removing and recuperating vapours comprises a pump (43).

17. Equipment according to claim 16, **characterised in that** the pump (43) is a steam ejector.

18. Equipment according to any one of claims 13 to 17, **characterised in that** the additional compartment (25) is mounted between the lowest stripping compartment (24) and the drying section (31), preferably underneath the lowest compartment (24) of the stripping section (29).

19. Equipment according to any one of claims 13 to 18 **characterised in that** the drying and/or cooling compartments are outside the shell (10) containing the additional compartment (25).

20. Equipment according to any one of claims 13 to 19, **characterised in that** the bottom of the additional compartment (25) is a tray provided with heating means.

21. Equipment according to any one of claims 13 to 20, **characterised in that** an agitating means (33-33') is mounted in the additional compartment (25).

22. Equipment according to any one of claims 13 to 21, **characterised in that** it comprises a heating section (28) for pre-desolventising the extraction residue upstream of the stripping section (29).

23. Equipment according to any one of claim 13 to 22, **characterised in that** it the drying section is followed by a cooling section.
